# EUROPEAN PATENT APPLICATION

(11) **EP 4 346 149 A1**
(43) Date of publication of application: **03.04.2024**
(21) Application number: 23196467.7
(22) Date of filing: 11.09.2023
(51) Int. Cl.: H04L 5/00

(54) **SIGNALLING FOR ACTIVATING USAGE OF RADIO RESOURCES**

(30) Priority: 27.09.2022 FI 20225839
(71) Applicant: Nokia Technologies Oy, 02610 Espoo (FI)
(72) Inventor: TIIROLA, Esa Tapani, 90620 Oulu (FI); HATHIRAMANI, Navin, Coppell, 75019 (US); KNUDSEN, Knud, 9440 Aabybro (DK); HAKOLA, Sami-Jukka, 90450 Kempele (FI); HVIID, Jan Torst, 9270 Klarup (DK)
(74) Representative: Nokia EPO representatives

(57) **Abstract**

Disclosed is a method comprising receiving, from an access node, instructions regarding receiving a signal, wherein the signal is for activating radio resources, wherein the radio resources comprise at least one of the following: monitoring of a downlink channel or monitoring of a second downlink signal or transmitting of an uplink channel or transmitting of an uplink signal, obtaining a selection that indicates a type according to which the signal is to be received, determining, based on the instructions, resources assigned for the signal, wherein the resources comprise at least time and frequency resources, periodicity and code resources, receiving the signal, in accordance with the type, by detecting the signal from the resources assigned to the signal, and in response to receiving the signal, activating the radio resources.

## Description

### Technical Field

The following exemplary embodiments relate to wireless communication and usage of power in a device for radio communication.

### Technical Background

Wireless communication networks, such as cellular communication networks evolve, and may be utilized for various purposes including use cases in which availability of power is limited for a device in the wireless communication network, that may also be understood as radio communication -based network. The usage of resources within a device for the radio communication requires power and thus it is in some use cases beneficial to minimize the amount of power needed by the resources for radio communication.

### Summary

The scope of protection sought for various embodiments of the invention is set out by the independent claims. The exemplary embodiments and features, if any, described in this specification that do not fall under the scope of the independent claims are to be interpreted as examples useful for understanding various embodiments of the invention.

According to a first aspect there is provided an apparatus comprising means for receiving, from an access node, instructions regarding receiving a signal, wherein the signal is for activating radio resources, wherein the radio resources comprise at least one of the following: monitoring of a downlink channel or monitoring of a second downlink signal or transmitting of an uplink channel or transmitting of an uplink signal, means for obtaining a selection that indicates a type according to which the signal is to be received, means for determining, based on the instructions, resources assigned for the signal, wherein the resources comprise at least time and frequency resources, periodicity and code resources, means for receiving the signal, in accordance with the type, by detecting the signal from the resources assigned to the signal, and means for, in response to receiving the signal, activating the radio resources.

In some example embodiments according to the first aspect, the means comprises at least one processor, and at least one memory, including a computer program code, wherein the at least one memory and the computer program code are configured, with the at least one processor, to cause the performance of the apparatus.

According to a second aspect there is provided an apparatus comprising at least one processor, and at least one memory storing instructions that, when executed by the at least one processor, to cause the apparatus at least to: receive, from an access node, instructions regarding receiving a signal, wherein the signal is for activating radio resources, wherein the radio resources comprise at least one of the following: monitoring of a downlink channel or monitoring of a second downlink signal or transmitting of an uplink channel or transmitting of an uplink signal, obtain a selection that indicates a type according to which the signal is to be received, determine, based on the instructions, resources assigned for the signal, wherein the resources comprise at least time and frequency resources, periodicity and code resources, receive the signal, in accordance with the type, by detecting the signal from the resources assigned to the signal, and, in response to receiving the signal, activate the radio resources.

In some example embodiments according to the second aspect, the signal has a plurality of orthogonal frequency-modulation symbols assigned to it and the apparatus is further caused to receive the signal by detecting at least one pre-determined sequence of symbols indicating ON- and OFF -status.

In some example embodiments according to the second aspect, at least one symbol is a constant amplitude zero autocorrelation sequence or a computer search -based zero autocorrelation sequence.

In some example embodiments according to the second aspect, the signal occupies a plurality of resource elements in frequency.

In some example embodiments according to the second aspect, some of the resource elements are reserved for guard.

In some example embodiments according to the second aspect, the type according to which the signal is to be received, comprises at least one of the following: receiving according to operation of an envelope detector, or receiving according to operation of a sequence detector.

In some example embodiments according to the second aspect, the apparatus is further caused to obtain at least one measurement indicative of coverage associated with the signal.

In some example embodiments according to the second aspect, the apparatus is further caused to transmit the at least one measurement to the access node.

In some example embodiments according to the second aspect, the apparatus is further caused to obtain the selection of the type by receiving an indication indicating the type from the access node.

In some example embodiments according to the second aspect, a structure of the signal is dependent on at least one of the following: a type or a configuration of the access node.

In some example embodiments according to the second aspect, the apparatus is further caused to obtain the selection of the type by determining the type based on the at least one measurement indicative of the coverage associated with the signal.

In some example embodiments according to the second aspect, the apparatus is further caused to inform the access node regarding the selection of the type.

In some example embodiments according to the second aspect, the at least one measurement indicative of the coverage associated with the signal is based on at least one of the following: a primary synchronization signal or a secondary synchronization signal or a beacon signal.

In some example embodiments according to the second aspect, the apparatus is further caused to determine that the signal has not been received within a pre-determined time period and, in response, to obtain a re-evaluation of the type.

According to a third aspect there is provided a method comprising: receiving, from an access node, instructions regarding receiving a signal, wherein the signal is for activating radio resources, wherein the radio resources comprise at least one of the following: monitoring of a downlink channel or monitoring of a second downlink signal or transmitting of an uplink channel or transmitting of an uplink signal, obtaining a selection that indicates a type according to which the signal is to be received, determining, based on the instructions, resources assigned for the signal, wherein the resources comprise at least time and frequency resources, periodicity and code resources, receiving the signal, in accordance with the type, by detecting the signal from the resources assigned to the signal, and, in response to receiving the signal, activating the radio resources.

In some example embodiments according to the third aspect, the method is a computer-implemented method.

According to a fourth aspect there is provided a computer program comprising instructions for causing an apparatus to perform at least the following: receive, from an access node, instructions regarding receiving a signal, wherein the signal is for activating radio resources, wherein the radio resources comprise at least one of the following: monitoring of a downlink channel or monitoring of a second downlink signal or transmitting of an uplink channel or transmitting of an uplink signal, obtain a selection that indicates a type according to which the signal is to be received, determine, based on the instructions, resources assigned for the signal, wherein the resources comprise at least time and frequency resources, periodicity and code resources, receive the signal, in accordance with the type, by detecting the signal from the resources assigned to the signal, and, in response to receiving the signal, activate the radio resources.

According to a fifth aspect there is provided a computer program comprising instructions stored thereon for performing at least the following: receiving, from an access node, instructions regarding receiving a signal, wherein the signal is for activating radio resources, wherein the radio resources comprise at least one of the following: monitoring of a downlink channel or monitoring of a second downlink signal or transmitting of an uplink channel or transmitting of an uplink signal, obtaining a selection that indicates a type according to which the signal is to be received, determining, based on the instructions, resources assigned for the signal, wherein the resources comprise at least time and frequency resources, periodicity and code resources, receiving the signal, in accordance with the type, by detecting the signal from the resources assigned to the signal, and, in response to receiving the signal, activating the radio resources.

According to a sixth aspect there is provided a non-transitory computer readable medium comprising program instructions for causing an apparatus to perform at least the following: receive, from an access node, instructions regarding receiving a signal, wherein the signal is for activating radio resources, wherein the radio resources comprise at least one of the following: monitoring of a downlink channel or monitoring of a second downlink signal or transmitting of an uplink channel or transmitting of an uplink signal, obtain a selection that indicates a type according to which the signal is to be received, determine, based on the instructions, resources assigned for the signal, wherein the resources comprise at least time and frequency resources, periodicity and code resources, receive the signal, in accordance with the type, by detecting the signal from the resources assigned to the signal, and, in response to receiving the signal, activate the radio resources.

According to a seventh aspect there is provided a non-transitory computer readable medium comprising program instructions stored thereon for performing at least the following: receiving, from an access node, instructions regarding receiving a signal, wherein the signal is for activating radio resources, wherein the radio resources comprise at least one of the following: monitoring of a downlink channel or monitoring of a second downlink signal or transmitting of an uplink channel or transmitting of an uplink signal, obtaining a selection that indicates a type according to which the signal is to be received, determining, based on the instructions, resources assigned for the signal, wherein the resources comprise at least time and frequency resources, periodicity and code resources, receiving the signal, in accordance with the type, by detecting the signal from the resources assigned to the signal, and, in response to receiving the signal, activating the radio resources.

According to an eighth aspect there is provided a computer readable medium comprising program instructions stored thereon for performing at least the following: receiving, from an access node, instructions regarding receiving a signal, wherein the signal is for activating radio resources, wherein the radio resources comprise at least one of the following: monitoring of a downlink channel or monitoring of a second downlink signal or transmitting of an uplink channel or transmitting of an uplink signal, obtaining a selection that indicates a type according to which the signal is to be received, determining, based on the instructions, resources assigned for the signal, wherein the resources comprise at least time and frequency resources, periodicity and code resources, receiving the signal, in accordance with the type, by detecting the signal from the resources assigned to the signal, and, in response to receiving the signal, activating the radio resources.

According to a ninth aspect there is provided an apparatus comprising means for determining that a signal is to be transmitted to a terminal device, wherein the signal is for activating radio resources of the terminal device, wherein the radio resources comprise at least one of the following: monitoring of a downlink channel or monitoring of a second downlink signal or transmitting of an uplink channel or transmitting of an uplink signal by the terminal device, means for obtaining a selection that indicates a type according to which the signal is to be received by the terminal device, means for providing, to the terminal device, instructions regarding receiving the signal, wherein the instructions comprise information regarding resources assigned for the signal, and wherein the resources comprise time and frequency resources, periodicity and code resources, and means for transmitting the signal to the terminal device for reception, in accordance with the type, by the terminal device.

In some example embodiments according to the ninth aspect, the means comprises at least one processor, and at least one memory, including a computer program code, wherein the at least one memory and the computer program code are configured, with the at least one processor, to cause the performance of the apparatus.

According to a tenth aspect there is provided an apparatus comprising at least one processor, and at least one memory storing instructions that, when executed by the at least one processor, to cause the apparatus at least to: determine that a signal is to be transmitted to a terminal device, wherein the signal is for activating radio resources of the terminal device, wherein the radio resources comprise at least one of the following: monitoring of a downlink channel or monitoring of a second downlink signal or transmitting of an uplink channel or transmitting of an uplink signal by the terminal device, obtain a selection that indicates a type according to which the signal is to be received by the terminal device, provide, to the terminal device, instructions regarding receiving the signal, wherein the instructions comprise information regarding resources assigned for the signal, and wherein the resources comprise time and frequency resources, periodicity and code resources, and transmit the signal to the terminal device for reception, in accordance with the type, by the terminal device.

In some example embodiments according to the tenth aspect, the apparatus is further caused to obtain the selection of the type, according to which the signal is to be received by the terminal device, by determining, for the terminal device, the type, and to transmit an indication indicating the type to the terminal device.

In some example embodiments according to the tenth aspect, the apparatus is further caused to obtain the selection of the type according to which the signal is to be received by the terminal device by determining the type based on measurements received from the terminal device.

In some example embodiments according to the tenth aspect, a structure of the signal is dependent on the type.

According to an eleventh aspect there is provided a method comprising: determining that a signal is to be transmitted to a terminal device, wherein the signal is for activating radio resources of the terminal device, wherein the radio resources comprise at least one of the following: monitoring of a downlink channel or monitoring of a second downlink signal or transmitting of an uplink channel or transmitting of an uplink signal by the terminal device, obtaining a selection that indicates a type according to which the signal is to be received by the terminal device, providing, to the terminal device, instructions regarding receiving the signal, wherein the instructions comprise information regarding resources assigned for the signal, and wherein the resources comprise time and frequency resources, periodicity and code resources, and transmitting the signal to the terminal device for reception, in accordance with the type, by the terminal device.

In some example embodiments according to the eleventh aspect, the method is a computer-implemented method.

According to a twelfth aspect there is provided a computer program comprising instructions for causing an apparatus to perform at least the following: determine that a signal is to be transmitted to a terminal device, wherein the signal is for activating radio resources of the terminal device, wherein the radio resources comprise at least one of the following: monitoring of a downlink channel or monitoring of a second downlink signal or transmitting of an uplink channel or transmitting of an uplink signal by the terminal device, obtain a selection that indicates a type according to which the signal is to be received by the terminal device, provide, to the terminal device, instructions regarding receiving the signal, wherein the instructions comprise information regarding resources assigned for the signal, and wherein the resources comprise time and frequency resources, periodicity and code resources, and transmit the signal to the terminal device for reception, in accordance with the type, by the terminal device.

According to a thirteenth aspect there is provided a computer program comprising instructions stored thereon for performing at least the following: determining that a signal is to be transmitted to a terminal device, wherein the signal is for activating radio resources of the terminal device, wherein the radio resources comprise at least one of the following: monitoring of a downlink channel or monitoring of a second downlink signal or transmitting of an uplink channel or transmitting of an uplink signal by the terminal device, obtaining a selection that indicates a type according to which the signal is to be received by the terminal device, providing, to the terminal device, instructions regarding receiving the signal, wherein the instructions comprise information regarding resources assigned for the signal, and wherein the resources comprise time and frequency resources, periodicity and code resources, and transmitting the signal to the terminal device for reception, in accordance with the type, by the terminal device.

According to a fourteenth aspect there is provided a non-transitory computer readable medium comprising program instructions for causing an apparatus to perform at least the following: determine that a signal is to be transmitted to a terminal device, wherein the signal is for activating radio resources of the terminal device, wherein the radio resources comprise at least one of the following: monitoring of a downlink channel or monitoring of a second downlink signal or transmitting of an uplink channel or transmitting of an uplink signal by the terminal device, obtain a selection that indicates a type according to which the signal is to be received by the terminal device, provide, to the terminal device, instructions regarding receiving the signal, wherein the instructions comprise information regarding resources assigned for the signal, and wherein the resources comprise time and frequency resources, periodicity and code resources, and transmit the signal to the terminal device for reception, in accordance with the type, by the terminal device.

According to a fifteenth aspect there is provided a non-transitory computer readable medium comprising program instructions stored thereon for performing at least the following: determining that a signal is to be transmitted to a terminal device, wherein the signal is for activating radio resources of the terminal device, wherein the radio resources comprise at least one of the following: monitoring of a downlink channel or monitoring of a second downlink signal or transmitting of an uplink channel or transmitting of an uplink signal by the terminal device, obtaining a selection that indicates a type according to which the signal is to be received by the terminal device, providing, to the terminal device, instructions regarding receiving the signal, wherein the instructions comprise information regarding resources assigned for the signal, and wherein the resources comprise time and frequency resources, periodicity and code resources, and transmitting the signal to the terminal device for reception, in accordance with the type, by the terminal device.

According to a sixteenth aspect there is provided a computer readable medium comprising program instructions stored thereon for performing at least the following: determining that a signal is to be transmitted to a terminal device, wherein the signal is for activating radio resources of the terminal device, wherein the radio resources comprise at least one of the following: monitoring of a downlink channel or monitoring of a second downlink signal or transmitting of an uplink channel or transmitting of an uplink signal by the terminal device, obtaining a selection that indicates a type according to which the signal is to be received by the terminal device, providing, to the terminal device, instructions regarding receiving the signal, wherein the instructions comprise information regarding resources assigned for the signal, and wherein the resources comprise time and frequency resources, periodicity and code resources, and transmitting the signal to the terminal device for reception, in accordance with the type, by the terminal device.

### List of Drawings

In the following, the invention will be described in greater detail with reference to the embodiments and the accompanying drawings, in which
FIG. 1 illustrates an example embodiment of a radio access network.
FIG. 2 illustrates an example embodiment of a terminal device in which radio resources are configured to be activated in response to receiving a wake-up signal.
FIG. 3 illustrates an example embodiment of a receiver configured to receive a wake-up signal.
FIG. 4 illustrates an example embodiment of a trade-off between power consumption and radio frequency sensitivity.
FIG. 5A and 5B illustrates example embodiments of wake-up signal transmissions.
FIG. 6 illustrates an example embodiment of a wake-up signal.
FIG. 7 and FIG. 8 illustrate flow charts according to example embodiments.
FIG. 9 and FIG. 10 illustrate example embodiments of an apparatus.

### Description of Embodiments

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Also, as used herein, "at least one of the following: <a list of two or more elements>" and similar wording, where the list of two or more elements are joined by "and" or "or", mean at least any of the elements, or at least any two or more of the elements, or at least all the elements.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, microcontrollers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via any suitable means. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments described herein may be implemented in a communication system, such as in at least one of the following: Global System for Mobile Communications (GSM) or any other second generation cellular communication system, Universal Mobile Telecommunication System (UMTS, 3G) based on basic wideband-code division multiple access (W-CDMA), high-speed packet access (HSPA), Long Term Evolution (LTE), LTE-Advanced, a system based on IEEE 802.11 specifications, a system based on IEEE 802.15 specifications, and/or a fifth generation (5G), as well as 5G-Advanced (i.e. 3GPP NR Rel-18 and beyond), mobile or cellular communication system. Also, the embodiments described herein may be implemented in a 6G communication system as well. The embodiments are not, however, restricted to the system given as an example but a person skilled in the art may apply the solution to other communication systems provided with necessary properties.

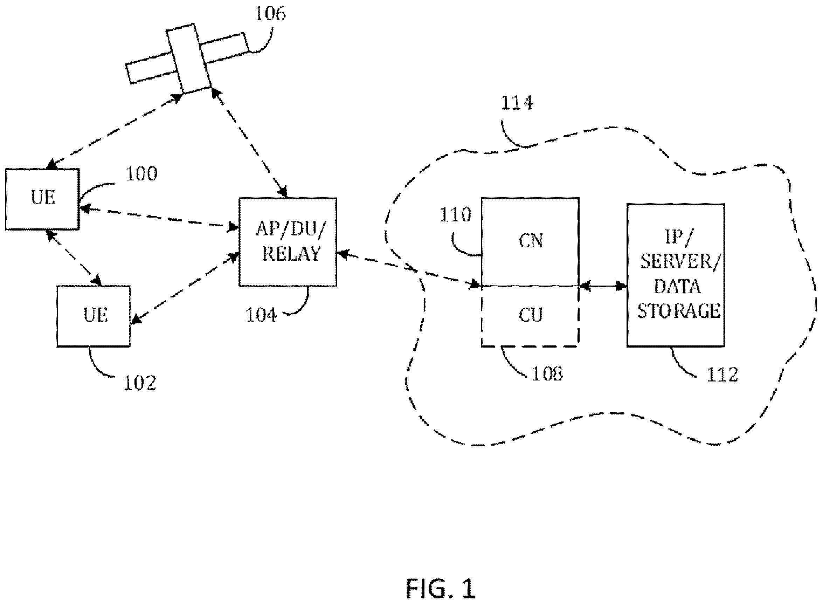

FIG. 1 depicts examples of simplified system architectures showing some elements and functional entities, all being logical units, whose implementation may differ from what is shown. The connections shown in FIG. 1 are logical connections; the actual physical connections may be different. It is apparent to a person skilled in the art that the system may comprise also other functions and structures than those shown in FIG. 1. The example of FIG. 1 shows a part of an exemplifying radio access network.

FIG. 1 shows terminal devices 100 and 102 configured to be in a wireless connection on one or more communication channels in a cell with an access node (such as (e/g)NodeB) 104 providing the cell. The access node 104 may also be referred to as a node. The wireless link from a terminal device to a (e/g)NodeB is called uplink or reverse link and the wireless link from the (e/g)NodeB to the terminal device is called downlink or forward link. It should be appreciated that (e/g)NodeBs or their functionalities may be implemented by using any node, host, server or access point etc. entity suitable for such a usage. It is to be noted that although one cell is discussed in this exemplary embodiment, for the sake of simplicity of explanation, multiple cells may be provided by one access node in some exemplary embodiments.

A communication system may comprise more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The (e/g)NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bidirectional radio links to user devices. The antenna unit may comprise a plurality of antennas or antenna elements. The (e/g)NodeB is further connected to core network 110 (CN or next generation core NGC). Depending on the system, the counterpart on the CN side may be a serving gateway (S-GW, routing and forwarding user data packets), packet data network gateway (P-GW), for providing connectivity of terminal devices (UEs) to external packet data networks, or mobile management entity (MME), etc.

The terminal device (also called UE, user equipment, user terminal, user device, etc.) illustrates one type of an apparatus to which resources on the air interface are allocated and assigned, and thus any feature described herein with a terminal device may be implemented with a corresponding apparatus, such as a relay node. An example of such a relay node is a layer 3 relay (self-backhauling relay) towards the base station. Another example of such a relay node is a layer 2 relay. Such a relay node may contain a terminal device part and a Distributed Unit (DU) part. A CU (centralized unit) may coordinate the DU operation via F1AP -interface for example.

The terminal device may refer to a portable computing device that includes wireless mobile communication devices operating with or without a subscriber identification module (SIM), or an embedded SIM, eSIM, including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be an exclusive or a nearly exclusive uplink only device, of which an example is a camera or video camera loading images or video clips to a network. A terminal device may also be a device having capability to operate in Internet of Things (IoT) network which is a scenario in which objects are provided with the ability to transfer data over a network without requiring human-to-human or human-to-computer interaction. The terminal device may also utilise cloud. In some applications, a terminal device may comprise a small portable device with radio parts (such as a watch, earphones or eyeglasses) and the computation is carried out in the cloud. The terminal device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented.

5G enables using multiple input- multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications such as (massive) machine-type communications (mMTC), including vehicular safety, different sensors and real-time control. 5G is expected to have multiple radio interfaces, namely below 6GHz, cmWave and mmWave, and also being integratable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G may require bringing the content close to the radio which may lead to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, and/or utilise services provided by them. The communication network may also be able to support the usage of cloud services, for example at least part of core network operations may be carried out as a cloud service (this is depicted in FIG. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labour between core network operations and base station operations may differ from that of the LTE or even be non-existent. Some other technology that may be used includes for example Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling or service availability in areas that do not have terrestrial coverage. Satellite communication may utilise geostationary earth orbit (GEO) satellite systems, but also low earth orbit (LEO) satellite systems, for example, mega-constellations. A satellite 106 comprised in a constellation may carry a gNB, or at least part of the gNB, that create on-ground cells. Alternatively, a satellite 106 may be used to relay signals of one or more cells to the Earth. The on-ground cells may be created through an on-ground relay node 104 or by a gNB located on-ground or in a satellite or part of the gNB may be on a satellite, the DU for example, and part of the gNB may be on the ground, the CU for example. Additionally, or alternatively, high-altitude platform station, HAPS, systems may be utilized.

It is to be noted that the depicted system is an example of a part of a radio access system and the system may comprise a plurality of (e/g)NodeBs, the terminal device may have an access to a plurality of radio cells and the system may comprise also other apparatuses, such as physical layer relay nodes or other network elements, etc. At least one of the (e/g)NodeBs may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG. 1 may provide any kind of these cells. A cellular radio system may be implemented as a multilayer network including several kinds of cells. In some exemplary embodiments, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. A network which is able to use "plug-and-play" (e/g)NodeBs, may include, in addition to Home (e/g)NodeBs (H(e/g)nodeBs), a home node B gateway, or HNB-GW (not shown in FIG. 1). A HNB Gateway (HNB-GW), which may be installed within an operator's network may aggregate traffic from a large number of HNBs back to a core network.

Some terminal devices, such as sensors or tags for example, may be expected to have battery lifetime of weeks or even years. Such terminal devices may be understood as low power terminal devices that are for communication over a radio communication network. For example, terminal devices without a continuous energy source, such as terminal devices using a small rechargeable and non- rechargeable single coin cell batteries, such as sensors and actuators, which are devices configured to activate passive terminal devices such as sensors or tags, that are deployed for monitoring, measuring, charging, etc. The batteries of passive terminal devices for example may not be rechargeable and may yet be expected to last at least a few weeks. Additionally, other terminal devices, for example wearables such as smart watches, rings, and medical monitoring devices, may be expected to have battery capacity that lasts up to 1-2 weeks. Further, in some use cases in addition to a long battery life the terminal device may be expected to be configured for latency-critical services. This may be the case for example with sensors that are to monitor for fire detection and extinguishing. Therefore, it is beneficial to address power saving aspect for such terminal devices. This may be addressed for example in layer 1 (L1) procedures and higher layer protocol changes needed for signalling that cause radio resources of a terminal device to be activated. Such signalling may be referred to as wake-up signalling (WUS). The radio resources may comprise any suitable radio resources, such as resources for receiving and/or transmitting signals, that are not active when the WUS for activating radio resources is received. As such, the terminal device may comprise for example at least two receivers, one for receiving a WUS while the at least one other is inactive until activated in response to receiving the WUS, or alternatively, one receiver part of which is active for receiving a WUS and part of which is inactive.

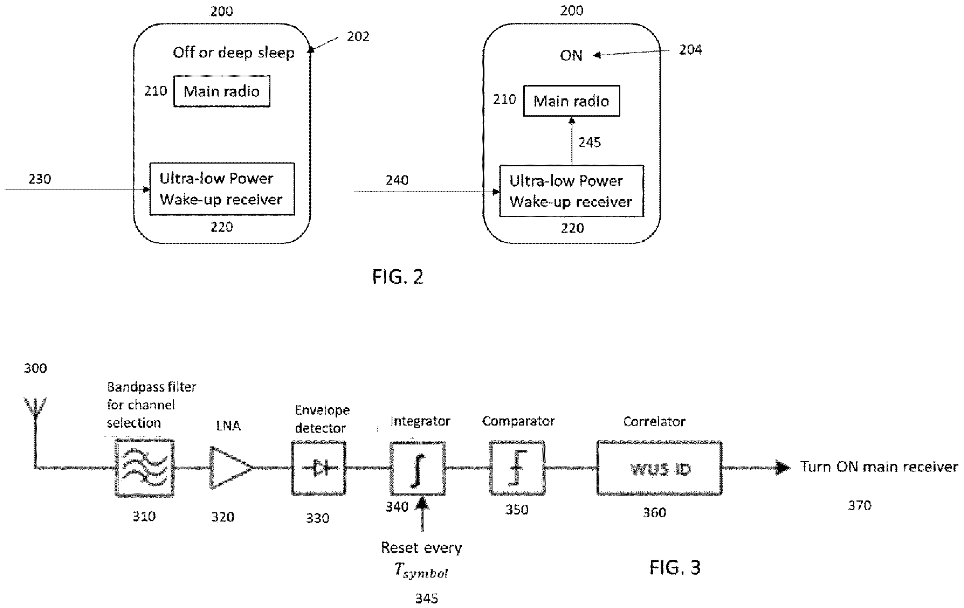

FIG. 2 illustrates an example embodiment of a terminal device in which radio resources are configured to be activated in response to receiving a WUS. In this example embodiment, there is a terminal device 200 that comprises a receiver 220 configured to receive WUS. The receiver 220 may be understood as an ultra-low power wake-up receiver (WUR) and it is separate from main radio resources 210 utilized for radio communication. The main radio resources 210 may be understood as a logical unit comprising hardware and software required for the radio communication. In this example embodiment the main radio resources 210 may be in a sleep mode, or alternatively powered off, for power saving and in response to a WUS received by the receiver 220, a trigger signal 245 may be provided to the main radio resources 210 to activate the main radio resources 210. Thus, the network may trigger the terminal device 210 to wake-up when needed in an event-driven manner, by transmitting a WUS 240 to the terminal device, which is monitored by the receiver 220. In response to receiving the WUS 240, the receiver 220 may then provide the trigger signal 245 to the main radio resources 210 to activate the main radio resources 210 and thus set the status 204 to "ON". A non-limiting example of triggering is so called random access procedure. Alternatively, if a WUS 230 is received that indicates an "OFF" status, the receiver 220 does not trigger the main radio resources 210 and the status 202 is kept as "OFF". In this example embodiment, the receiver 220 is configured to operate in an "always on" -manner and its power consumption is significantly less than that of the main radio resources 210. It is possible to define and configure a DRX pattern for WUR. For example, the receiver 220 may comprise hardware dedicate merely for monitoring receiving of a WUS signal.

An orthogonal frequency-division multiplexing (OFDM) transmitter may be configured to use sequences used to generate an ON symbol comprised in the WUS 240. This may be achieved by using a maximum amplitude of a resource element (RE) (except the DC carrier in the middle) thereby maximizing the energy in a multicarrier on-off keying (MC-OOK) ON symbol. When transmitting the OFF symbol comprised in the WUS 230, the sequences may be 0, thereby minimizing the energy in MC-OOK OFF symbol. The transmitted bits that are "0" or "1" may be translated into a sequence of alternating "ON" and "OFF" symbols, where the sub-carriers in the ON symbols have high energy (e.g., sub carriers other than DC are having maximum amplitude) and the sub carriers in the OFF symbols are all 0. The cyclic prefix part of the OFDM symbol may be considered as part of the OFDM symbol.

FIG. 3 illustrates an example embodiment of a receiver, such as the receiver 220, that is configured to receive a WUS and, if the WUS is determined to indicate ON -status, to transmit a trigger signal to activate main radio resources. The receiver illustrated in this example embodiment is applicable to receive on-off keying (OOK), but may also be used for MC-OOK signal. There is an antenna 300 that receives the WUS, for which band-pass filtering for channel selection 310 is then applied. Then a low-noise amplifier (LNA) 320 amplifies the WUS before it is fed into an envelope detector 330. After the envelope detector 330, the signal will be a low frequency signal being either low when a 0 is received or high when a 1 is received. By integrating the low frequency signal, by an integrator 340, over each symbol duration, the signal noise is suppressed, and a comparator 350 may then determine if the received symbol is a 0 or 1 by comparing with the average signal level. It is to be noted that the integrator 340 is reset after every *T_{symbol}* 345. Finally, the received bit stream is fed to a correlator 360 which correlates the detected bit sequence with the expected WUS message. In case the WUS is determined to indicate "ON", the main receiver resources are turned on 370.

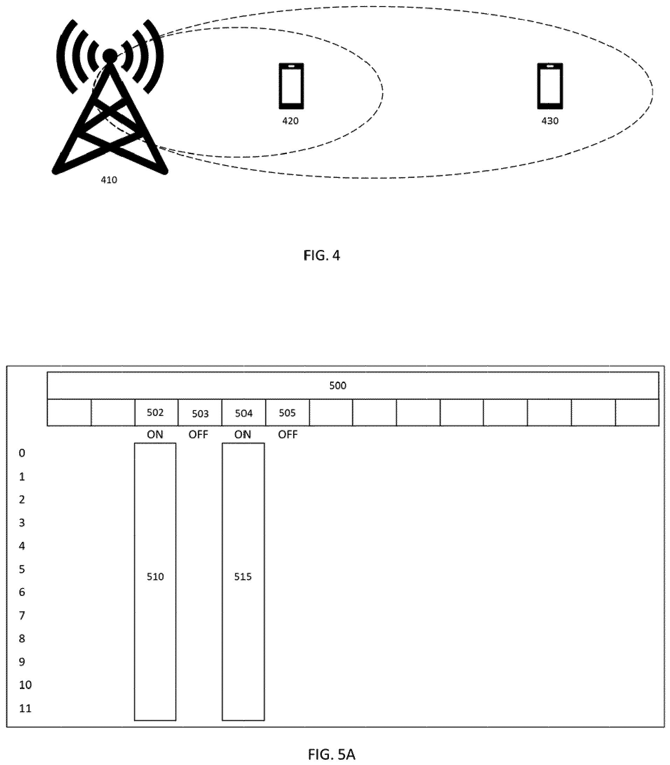

Yet, there is a trade-off between power consumption and radio frequency (RF) sensitivity, which may be understood as coverage, of a receiver configured to receive WUS. The receiver configured to receive the WUS may be significantly worse than the main receiver. This is illustrated in the example embodiment of FIG. 4. In this example embodiment, there is an access node 410, such as a gNB, that may transmit a WUS, and then a terminal device 420 and a terminal device 430. The terminal devices 420 and 430 comprise a receiver configured to receive the WUS. In this example, the terminal device 420 has good coverage while the terminal device 430 has bad coverage. OOK may have very small power consumption and may thus be utilized whenever possible, but on the other hand, OOK may suffer from relatively poor sensitivity resulting in low coverage. Therefore, it would be beneficial to achieve power saving in a terminal device when using OOK based receiver configured to receive WUS also when the coverage is low, which may also be understood as coverage being bad.

A receiver that is configured to receive a WUS may be of various types. For example, it may be an envelope detector, such as 1-bit OOK, or a sequence detector that may also be understood as a sequence collector. Thus, the WUS is to have structure that is detectable by the receiver regardless of the type of the detector.

FIG. 5A illustrates an example embodiment of a WUS transmission. The WUS may be transmitted for example by an access node and may be received by a receiver, that is configured to receive the WUS, and is comprised in a terminal device. The WUS transmission in this example embodiment may be such that if the WUS is transmitted, and thus received by the terminal device at a given time slot, the WUS is determined to indicate ON -status 510 and if the WUS is not transmitted in the given time slot, the status is determined to be OFF -status 520. A WUS occupies, in this example embodiment, more than one OFDM symbol. At least one OFDM symbol is always OFF, and at least one another OFDM symbol is ON.

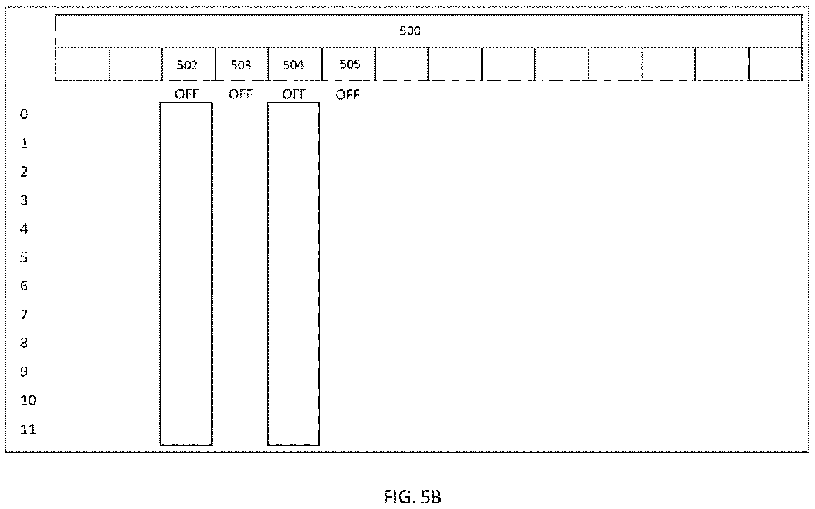

According to the example embodiment shown in Fig. 5A two predefined symbols (502, 504) are ON, and two predefined symbols (503, 505) are OFF when an event "WUS is triggered" happens. Another event "WUS not triggered" corresponds to the case where all OFDM symbols are OFF as is illustrated in FIG. 5B. Thus, upon detecting at least one pre-determined sequence of symbols indicating ON- and OFF-status, in other words at least one pre-determined ON/OFF symbol sequence, the terminal device is caused to receive a WUS by the receiver. It is to be noted though that additionally there may be another pre-determined sequence of symbols that may then be used to indicate that one terminal device is to be activated, in other words the pre-determined sequence of symbols may be used to wake-up the terminal device. Similarly, there may also be a pre-determined sequence of symbols dedicated for indicating that a group of terminal devices are to be activated, in other words, the pre-determined sequence of symbols is used to wake-up the group of terminal devices. As a further additional option, there may also be a pre-determined sequence of symbols used for providing a go-to-sleep signal for the terminal device. And in a similar manner, a certain pre-determined sequence of symbols may be used for providing a go-to-sleep signal for a group of terminal devices. The go-to-sleep signal may also be understood as a negative wake-up (DTX).

Additionally, it is to be noted that the WUS may be associated with a predetermined synchronization signal block (SSB) beam. There may also be different time domain WUS resources for different SSB beams.

It is to be noted though that Fig. 5A and 5B should be seen as illustrating non-limiting example embodiments. In another example embodiment, the event "WUS not triggered" could be the following symbol sequence: OFF (502), ON (503), OFF (504), ON (505). It is to be noted that triggered may be understood as transmitted. There can be also more than two events each with a unique ON/OFF pattern. For example, different events could be used to trigger WUS for different UEs, or different group of UEs. They could be used also for different purposes, such as trigger for system information update, trigger for paging, trigger for mobility measurements, etc.

In this example embodiment, the WUS occupies 4 OFDM symbols, and two of them 503 and 505, are always OFF. It is to be noted though that although there are 4 OFDM symbols in this example embodiment, in some other example embodiments there may be another number of OFDM symbols occupied by the WUS. In general, there is a pre-determined number of OFDM symbols occupied by the WUS. The WUS occupies also a number of resource elements (Res) 500, in frequency. Some of those Res may be reserved for guard. Depending on the type of the received WUS, the terminal device, comprising the receiver, detects either one or more sequences or an envelope. For example, the sequence(s) may be constant amplitude zero autocorrelation (CAZAC) sequences with predefined base sequence(s) and cyclic shifts(s). It is also to be noted alternative to CAZAC, the sequence(s) may also be computer search -based zero autocorrelation (ZAC) sequence(s), or any other suitable sequence(s). In the FIG. 5A there are two CAZAC sequences, 510 and 515 that indicate ON times, in other words, WUS signals that indicate that main radio resources for communication are to be activated. These sequences are transmitted during the time slots 502 and 504. The time slots 503 and 505 in this example embodiment are always OFF. FIG. 5B, illustrates a variation of the example embodiment illustrated in 5A. In this example embodiment, during the time slots 502 and 504 the sequences are not transmitted and thus the WUS is not transmitted, and the terminal device determines that the main radio resources are not to be activated as it has not received the WUS.

In an example embodiment, a terminal device that comprises main radio resources and more than one receiver configured to receive a WUS, the terminal device may autonomously select a WUS receiver. Thus, if the terminal device comprises two types of receivers for receiving WUS, for example an envelope type and a sequence detecting type, then the terminal device may determine which receiver to use for receiving WUS. It is to be noted that in general, the terminal device may receive the WUS according to a type. The type according to which the WUS is received by the terminal device may be in accordance with operation of a receiver type. For example, the WUS may be received according to a type, wherein the type corresponds to the operation of a receiver that is an enveloped type of a receiver and thus, the type may be according to operation of an envelope detector. As another example, the WUS may be received according to a type, wherein the type corresponds to the operation of a receiver that is sequence detecting type of a receiver and thus, the type may be according to operation of a sequence detector. It is also to be noted that in some example embodiments, the type may correspond to a mode of the terminal device or a state of the terminal device or a mode of the terminal device receiver or a state of the terminal device receiver.

As in this example embodiment the WUS functionality does not vary according to the type of the receiver, regardless of the receiver type the terminal device may determine if the WUS has been transmitted during a time slot or not. In this example embodiment, the terminal device may provide an indication to an access node, wherein the indication indicates which receiver it has selected for receiving the WUS. In other words, the terminal device may inform the access node regarding selection of the type after it has obtained the selection of the type by determining it. This may be performed using signalling in higher levels than L1. The selection may be performed based on at least one obtained measurement indicative of WUS coverage, for example based on downlink (DL) measurements such as synchronization signal block (SSB) or channel state information reference signal (CSI-RS). The DL measurements may be performed using a receiver comprised in the main radio resources. In general, obtaining at least one measurement indicative of WUS coverage, may be understood as measuring and/or as obtaining pre-existing measurements.

Optionally, the terminal device may inform the network if it is in a coverage in which the coverage is less than a pre-determined threshold thus making the coverage to be determined as extremely bad. In such coverage sequence detection may be too challenging in terms of coverage for example. In such coverage, the terminal device may be expected to activate the main radio resources to perform cell selection or reselection measurements. As such, the terminal device may apply a fallback procedure such as physical downlink control channel (PDCCH) detection based WUS or paging for activating main radio resources.

Alternatively, the terminal device may use primary synchronization signal (PSS) and/or secondary synchronization signal (SSS) as a reference signal for determining if an envelope detector can be utilized for detecting WUS. PSS/SSS may be used by the envelope detector as those signals are surrounded by the guard bands and PSS/SSS are always-on signals with the default period of 20 ms. The WUS may be configured on the same resources in frequency as PSS/SSS to avoid frequency retuning between validation, regarding whether enveloped detector could be feasible to use, and detection of the WUS.

In this example embodiment, the WUS coverage may be optimized by means of sequence -based detection and also, power consumption of the terminal device may be optimized by means of envelope detection if that is supported by WUS coverage. Depending on the WUR implementation, sequence -based detection may be done in the frequency domain. Alternatively, it may be done for the time domain signal.

In an embodiment, sequence detector used for sequence based WUR is made using certain hardware/building blocks of the main receiver. For example, correlators used to detect current PSS (primary synchronization signal) and/or SSS (secondary synchronization signal) can be used as hardware resources for sequence based WUR. Similar hardware reuse between WUR and main receiver can be used also between envelope detector (WUR) and main receiver, and/or between envelope detector (WUR) and sequence detector (WUR)

In another example embodiment, an access node, such as gNB, which transmits a WUS to a terminal device, the access node may perform the selection of a receiver that is to receive the WUS. The access node may thus define, for different terminal devices, their respective receiver that is to be used for receiving the WUS and then, in response, activate the main radio resources. In other words, the terminal device obtains a selection of the type as the access node informs the terminal device regarding the type according to which the WUS is to be received. For example, the receiver may be selected in a cell-specific manner such that within a cell provided by the access node, such that the receiver type to be the same for all terminal devices served by the cell. Alternatively, the receiver may be selected in a terminal device - specific manner. In this approach, the selection is performed individually for the terminal devices served by the cell by the access node. As such, the terminal devices may provide at least one measurement results indicative regarding WUS coverage. Such measurements may be performed by the main radio resources of a terminal device and those may be measurements such as reference signal received power (RSRP), reference signal strength indicator (RSSI) and/or CSI. For example, the main radio resources of the terminal device may be configured to provide CSI measurement and reporting scheme indicative regarding performance of the receiver configured to receive the WUS.

In this example embodiment, functionality of the WUS may vary depending on the type of receiver and/or access node configuration. That is, the structure of the WUS may vary based on the selection of the type according to which the WUS is to be received and/or based on the configuration of the access node. For example, for envelope detection OOK may be utilized while for sequence detection, the WUS may convey more bits for those terminal devices that are configured to operate according to sequence -detection. These bits may be used e.g. for indicating a certain WUS event out of multiple WUS events and/or for selecting a WUS sub-group.

Optionally, the terminal device(s) may provide a measurement threshold, such as RSRP, RSSI, CQI, as a capability information to indicate that the measurement result may be at least the given threshold for the terminal device to be able to use envelope detector. Based on this capability information, the access node may determine type of receiver for the WUS may be used by the terminal devices in the cell-based selection.

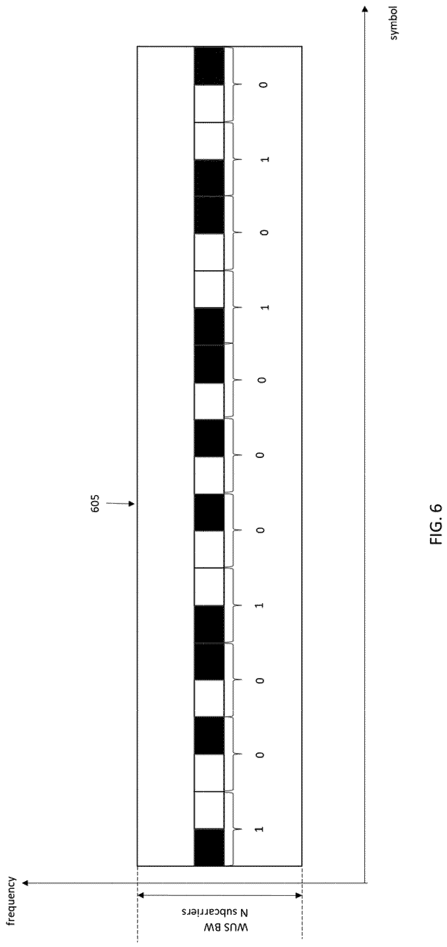

FIG. 6 illustrates an example embodiment of WUS in which there are REs in frequency domain reserved for guard thus forming a guard band 605. A guard band shall be present on both sides of the WUS signal to allow filter ramping. If the access node knows that MC-OOK receiver is used by a terminal device, it may use the sub-carriers in the guard band 605 for the "ON" symbols. Else, the access node to ensure that the guard band 605 is unused such that it does not impact the time domain correlate. In this example embodiment, the WUS is Manchester encoded such that every 0 and 1 comprises alternating ON and OFF periods and the order of the ON and OFF sequences determine if the interpretation is to be 1 or 0. In this example embodiment, the ON periods are marked as black and OFF periods as white.

Alternatively, in some example embodiments, a guard band may not be provided. For example, when using the MC-OOK, it may be an advantage to have signal also in the frequency band that could otherwise be a guard band. The time domain correlator may also work with a signal inside the guard band if it correlates with a corresponding signal + filter response.

It is to be noted that radio resource control (RRC) configuration of the WUS may comprise an indication for the guard band utilization, if it is to be utilized.

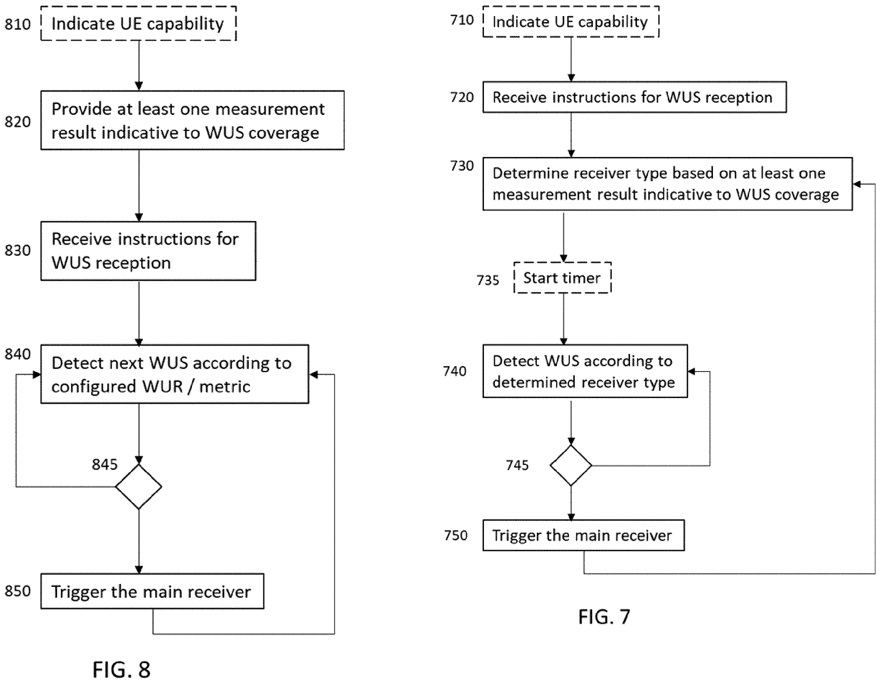

FIG. 7 illustrates a flow chart according to an example embodiment. In this example embodiment, a terminal device selects a receiver for receiving a WUS transmitted by an access node. In this example embodiment, the access node, which is a gNB, provides transmission that serves both envelope and sequence receiver types. In other words, the gNB transmission may not change according to the receiver type in this example embodiment. In step 710, the terminal device may indicate its capability to the access node. It is to be noted that this may be an optional step. Next, in step 720, the terminal device receives instructions, from the access node, regarding receiving the WUS. The instructions regarding receiving may comprise information regarding time and/or frequency resources, periodicity and code resources for example. The instructions can be made e.g. using radio resource configuration (RRC) signalling.

Then, in step 730, the terminal device may then determine the type of the receiver to be used for receiving the WUS. The determination may be based on at least one measurement result that is indicative to WUS coverage. After this, optionally, a timer may be started in step 735. Next, in step 740, the terminal device may detect the WUS according to determined receiver type and thus activate operation of receiving a WUS. The operation in this example embodiments comprises detecting WUS from configured resources. In 745 however, a determination may be made regarding if the WUS has been detected. If the WUS has not been detected, and, optionally, if the timer has not expired either, the flow chart returns to step 740. If the WUS has been detected, or, optionally, the timer has expired, the flow chart proceeds to step 750. In step 750, in response to detecting a WUS, the terminal device then provides a trigger signal to activate main radio resources comprised in the terminal device, wherein the main radio resources comprise a main receiver that is activated. The terminal device may after the activation of the main radio resources, that are radio resources comprising a receiver intended to be the main receiver instead of the receiver configured to detect the WUS, operate according to pre-defined rules. After step 750, the flow chart proceeds back to the step 730.

In the optional step 735, the terminal device may be configured to apply a time using the timer to provide an indication when to re-consider the selection of the WUS receiver. This timer may be reset when WUS is detected. It is to be noted that the WUS may be a WUS beacon. If the timer indicates that a time period for longer than a threshold value has expired, the terminal device may be configured to activate the main radio resources and to perform the step 730 again as described above.

It is to be noted, that if as a result of the measurements performed by the terminal device in step 730, the serving cell signal is determined to be below a threshold value and thus extremely poor or the terminal device determined that it would not be able to decode the sequence based WUS, the terminal device may inform the network it is activating its main radio resources and the terminal device may then perform cell (re)-selection measurements.

FIG. 8 illustrates an example embodiment in which an access node configures for a terminal device a selection of a receiver for the WUS. First, optionally, in step 810, the terminal device provides an indication regarding its capabilities to the access node. Then in step 820, the terminal device provides, to the access node at least one measurement results that are indicative of the WUS coverage and after that, in step 830, the terminal device receives, from the access node, instructions regarding receiving a WUS transmitted by the access node. The instructions may comprise information such as time and/or frequency resources and power metric vs. sequence metric. Thus, the instructions may convey implicit or explicit indication of the receiver type to be used for receiving the WUS. The instructions can be made e.g. using radio resource configuration (RRC) signalling.

Next, in step 840, the terminal device performs operation for receiving the WUS in accordance with the selected receiver for receiving the WUS. The receiver may also be referred to as wake-up receiver (WUR). The terminal device thus detects if a WUS is received in step 845, and if it is, the terminal device then causes a trigger signal to be provided to the main radio resources comprising the main receiver for radio communication as indicated in step 850, after which the terminal device proceeds back to step 840. If the WUS is not detected, the terminal device again returns to the step 840. As with the example embodiment of FIG. 7, a timer may also be utilized to trigger re-evaluation of receiver used for receiving WUS in case a WUS has not been detected during a pre-determined time period. Also, as in the example embodiment of FIG. 7, if as a result of the measurements performed by the terminal device is step 820, the serving cell signal is determined to be below a threshold value indicating that it is extremely poor or the terminal device determines it would not be able to decode the sequence based WUS, the terminal device may inform the access node that it is starting its main receiver and the terminal device could then perform cell (re)-selection measurements.

The example embodiments described above may have advantages such as providing a good trade-off between power saving of a terminal device and WUS coverage. This may be beneficial from the point of view of an access node as a single access node transmit processing may serve multiple receiver types of a terminal device. The capability of a terminal device to report extremely poor coverage or incapability to decode sequence based WUS may also help to preserves mobility principles.

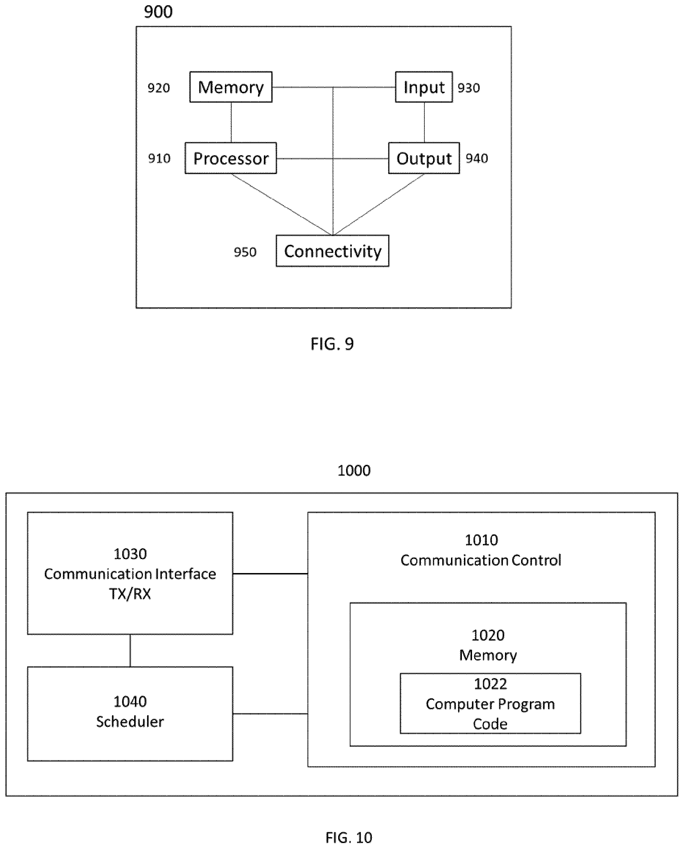

FIG. 9 illustrates an apparatus 900, which may be an apparatus such as, or comprised in, a terminal device, according to an example embodiment, and that may embody the activator or the reader as described above. The apparatus 900 comprises a processor 910. The processor 910 interprets computer program instructions and processes data. The processor 910 may comprise one or more programmable processors. The processor 910 may comprise programmable hardware with embedded firmware and may, alternatively or additionally, comprise one or more application specific integrated circuits, ASICs.

The processor 910 is coupled to a memory 920. The processor is configured to read and write data to and from the memory 920. The memory 920 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 920 stores computer readable instructions that are execute by the processor 910. For example, non-volatile memory stores the computer readable instructions and the processor 910 executes the instructions using volatile memory for temporary storage of data and/or instructions.

The computer readable instructions may have been pre-stored to the memory 920 or, alternatively or additionally, they may be received, by the apparatus, via electromagnetic carrier signal and/or may be copied from a physical entity such as computer program product. Execution of the computer readable instructions causes the apparatus 900 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 900 further comprises, or is connected to, an input unit 930. The input unit 930 comprises one or more interfaces for receiving a user input. The one or more interfaces may comprise for example one or more motion and/or orientation sensors, one or more cameras, one or more accelerometers, one or more microphones, one or more buttons and one or more touch detection units. Further, the input unit 930 may comprise an interface to which external devices may connect to.

The apparatus 900 also comprises an output unit 940. The output unit comprises or is connected to one or more displays capable of rendering visual content such as a light emitting diode, LED, display, a liquid crystal display, LCD and a liquid crystal on silicon, LCoS, display. The output unit 940 further comprises one or more audio outputs. The one or more audio outputs may be for example loudspeakers or a set of headphones.

The apparatus 900 may further comprise a connectivity unit 950. The connectivity unit 950 enables wired and/or wireless connectivity to external networks. The connectivity unit 950 may comprise one or more antennas and one or more receivers that may be integrated to the apparatus 900 or the apparatus 900 may be connected to. The connectivity unit 950 may comprise an integrated circuit or a set of integrated circuits that provide the wireless communication capability for the apparatus 900. Alternatively, the wireless connectivity may be a hardwired application specific integrated circuit, ASIC.

It is to be noted that the apparatus 900 may further comprise various component not illustrated in the FIG. 9. The various components may be hardware component and/or software components.

The apparatus 1000 of FIG. 10 illustrates an example embodiment of an apparatus that may be an access node or be comprised in an access node, and that may embody the activator or the reader as described above. The apparatus may be, for example, a circuitry or a chipset applicable to an access node to realize the described embodiments. The apparatus 1000 may be an electronic device comprising one or more electronic circuitries. The apparatus 1000 may comprise a communication control circuitry 100 such as at least one processor, and at least one memory 1020 including a computer program code (software) 1022 wherein the at least one memory and the computer program code (software) 1022 are configured, with the at least one processor, to cause the apparatus 1000 to carry out any one of the example embodiments of the access node described above.

The memory 1020 may be implemented using any suitable data storage technology, such as semiconductor-based memory devices, flash memory, magnetic memory devices and systems, optical memory devices and systems, fixed memory and removable memory. The memory may comprise a configuration database for storing configuration data. For example, the configuration database may store current neighbour cell list, and, in some example embodiments, structures of the frames used in the detected neighbour cells.

The apparatus 1000 may further comprise a communication interface 1030 comprising hardware and/or software for realizing communication connectivity according to one or more communication protocols. The communication interface 1030 may provide the apparatus with radio communication capabilities to communicate in the cellular communication system. The communication interface may, for example, provide a radio interface to terminal devices. The apparatus 1000 may further comprise another interface towards a core network such as the network coordinator apparatus and/or to the access nodes of the cellular communication system. The apparatus 1000 may further comprise a scheduler 1040 that is configured to allocate resources.

Even though the invention has been described above with reference to example embodiments according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus comprising:
means for receiving, from an access node, instructions regarding receiving a signal, wherein the signal is for activating radio resources of the apparatus utilized for radio communication;
means for obtaining a selection that indicates a type according to which the signal is to be received;
means for determining, based on the instructions, resources assigned for the signal, wherein the resources comprise at least time and frequency resources, periodicity and code resources;
means for receiving the signal, in accordance with the type, by detecting the signal from the resources assigned to the signal; and
means for, in response to receiving the signal, activating the radio resources.

2. An apparatus according to claim 1, wherein the signal has a plurality of orthogonal frequency-modulation symbols assigned to it and the apparatus is further caused to receive the signal by detecting a pre-determined sequence of symbols indicating ON- and OFF -status.

3. An apparatus according to claim 2, wherein at least one symbol of the pre-determined sequence of symbols carry a constant amplitude zero autocorrelation sequence or a computer search -based zero autocorrelation sequence.

4. An apparatus according to any previous claim, wherein the type according to which the signal is to be received, comprises at least one of the following: receiving according to operation of an envelope detector, or receiving according to operation of a sequence detector.

5. An apparatus according to any previous claim, wherein the apparatus further comprises means for obtaining at least one measurement indicative of coverage associated with the signal.

6. An apparatus according to claim 5, wherein the apparatus further comprises means for transmitting the at least one measurement to the access node.

7. An apparatus according to any previous claim, wherein the apparatus further comprises means for obtaining the selection of the type by receiving an indication indicating the type from the access node.

8. An apparatus according to claim 5, wherein the apparatus further comprises means for obtaining the selection of the type by determining the type based on the at least one measurement indicative of the coverage associated with the signal.

9. An apparatus according to claim 8, wherein the apparatus further comprises means for informing the access node regarding the selection of the type.

10. An apparatus according to any previous claim, wherein the apparatus further comprises means for determining that the signal has not been received within a pre-determined time period and, in response, for obtaining a re-evaluation of the type.

11. An apparatus comprising:
means for determining that a signal is to be transmitted to a terminal device, wherein the signal is for activating radio resources of the terminal device utilized for radio communication;
means for obtaining a selection that indicates a type according to which the signal is to be received by the terminal device;
means for providing, to the terminal device, instructions regarding receiving the signal, wherein the instructions comprise information regarding resources assigned for the signal, and wherein the resources comprise time and frequency resources, periodicity and code resources; and
means for transmitting the signal to the terminal device for reception, in accordance with the type, by the terminal device.

12. An apparatus according to claim 11, wherein the apparatus further comprises:
means for obtaining the selection of the type, according to which the signal is to be received by the terminal device, by determining, for the terminal device, the type; and
means for transmitting an indication indicating the type to the terminal device.

13. An apparatus according to claim 11, wherein the apparatus further comprises means for obtaining the selection of the type according to which the signal is to be received by the terminal device by determining the type based on measurements received from the terminal device.

14. An apparatus according to any of claims 11 to 13, wherein a structure of the signal is dependent on the type.

15. A method comprising:
receiving, from an access node, instructions regarding receiving a signal, wherein the signal is for activating radio resources of a terminal device utilized for radio communication;
obtaining a selection that indicates a type according to which the signal is to be received;
determining, based on the instructions, resources assigned for the signal, wherein the resources comprise at least time and frequency resources, periodicity and code resources;
receiving the signal, in accordance with the type, by detecting the signal from the resources assigned to the signal; and
in response to receiving the signal, activating the radio resources.
